(19) Europäisches Patentamt
European Patent Office
Office européen des brevets

(11) Numéro de publication : **0 129 473**
**B1**

(12) # FASCICULE DE BREVET EUROPÉEN

(45) Date de publication du fascicule du brevet : **10.09.86**

(51) Int. Cl.[4] : **B 01 J 8/00**, B 01 J 21/18, C 09 K 5/00

(21) Numéro de dépôt : **84401212.0**

(22) Date de dépôt : **13.06.84**

(54) **Procédé de mise en œuvre de réactions gaz solide.**

(30) Priorité : **15.06.83 FR 8309885**

(43) Date de publication de la demande : **27.12.84 Bulletin 84/52**

(45) Mention de la délivrance du brevet : **10.09.86 Bulletin 86/37**

(84) Etats contractants désignés : **AT BE CH DE GB IT LI NL SE**

(56) Documents cités :
**EP-A- 0 060 317**
**EP-A- 0 085 121**
**FR-A- 1 127 928**
**FR-A- 2 371 207**

(73) Titulaire : **SOCIETE NATIONALE ELF AQUITAINE**
**Tour Aquitaine**
**F-92400 Courbevoie (FR)**

(72) Inventeur : **Coste, Camille**
**Impasse des Alpères**
**F-66400 Ceret (FR)**
Inventeur : **Crozat, Georges**
**59 Rue Julien Péan**
**F-66000 Perpignan (FR)**
Inventeur : **Mauran, Sylvain**
**2 Rue de Théza**
**F-66000 Perpignan (FR)**

(74) Mandataire : **Ohresser, François**
**Société Nationale Elf Aquitaine Division Proprieté Industrielle Tour Elf**
**F-92078 Paris La Défense Cédex 45 (FR)**

**EP 0 129 473 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention a pour objet un procédé perfectionné de mise en œuvre de réactions chimiques de type gaz-solide permettant des vitesses de réaction plus importantes et des stœchiométries de réaction améliorées.

Les réactions chimiques endothermiques ou exothermiques entre un solide et un gaz sont généralement lentes et freinées : essentiellement par deux facteurs : la diffusion et la conductibilité. En effet, un facteur limitant est une mauvaise diffusivité du gaz dans le lit de particules solides qui réagissent avec lui. Au cours de la première phase de la réaction, on observe souvent un gonflement du solide qui peut ne pas être négligeable : par exemple 4 à 5 fois en volume pour des halogénures alcalins, alcalino-terreux ou métalliques avec des gaz comme l'ammoniac ou ses dérivés ou des alcools. Le temps mis par le gaz en fin de réaction stœchiométrique pour atteindre le site réactionnel devient très long ou même la fin de la réaction n'est plus atteinte. Dans le cas où on réalise plusieurs réactions aller-retour, un tassement du lit peut également se produire, diminuant encore la stœchiométrie ou allongeant le temps de réaction. Un autre facteur limitant est la mauvaise conductibilité thermique du lit de particules.

Les solides tels que les halogénures, pseudohalogénures, sulfates, nitrates, phosphates... sont très mauvais conducteurs. Par exemple lors de la réaction exothermique entre un solide et un gaz si le solide se trouve à la température $T_A$, il va réagir à la vitesse $v_A$. Si le milieu réactionnel est mauvais conducteur, et n'arrive pas à éliminer rapidement les calories produites, la température du solide va croître, jusqu'à $T_B$ beaucoup plus proche des conditions de l'équilibre entraînant une vitesse $v_B$ beaucoup plus lente que $v_A$. La température peut ainsi croître jusqu'aux conditions thermodynamiques d'équilibre c'est-à-dire à vitesse nulle. Ceci même montre comment la réaction peut se trouver ralentie, annulée ou inversée.

Le moyen habituellement utilisé pour remédier à ces inconvénients est :

— une charge faible de solide pour le volume de réacteur utilisé permettant une diffusion aisée du gaz dans le milieu réactionnel,

— une surface d'échange très importante pour un volume donné de réactif solide, ce qui permet une évacuation des calories ou au contraire l'apport de calories pour les réactions endothermiques.

Ces moyens sont particulièrement onéreux en volume de réacteur et en dimension de l'échangeur solide.

La présente invention a pour but de pallier ces inconvénients en permettant au sein du milieu réactionnel une amélioration de la diffusion du gaz et une amélioration de la conductibilité thermique de la partie solide du milieu réactionnel.

La présente invention a pour objet un procédé perfectionné de mise en œuvre de réactions chimiques de type gaz-solide, caractérisé en ce qu'on ajoute au milieu réactionnel du graphite expansé de masse volumique comprise entre 0,001 et 0,02 g/cm$^3$.

La quantité de graphite expansé ajoutée au milieu est généralement comprise entre 1 et 60 % (poids) de la quantité de solide réactant présent dans le milieu réactionnel.

Le graphite expansé est un graphite obtenu, par le chauffage de complexes de graphites, eux-mêmes préparés à partir de graphite naturel.

Le graphite naturel en paillettes est susceptible d'absorber sous certaines conditions de nombreux composés chimiques ou leur mélange qui s'insèrent entre les feuillets du réseau de graphite pour former des complexes.

A titre d'exemples de composés chimiques susceptibles de former avec le graphite naturel des complexes de graphite on peut citer :

— l'acide nitrique ($HNO_3$)
— l'acide sulfurique ($H_2SO_4$)
— l'acide fluorhydrique (HF)
— l'acide orthophosphorique ($H_3PO_4$)
— le chlorure ferrique ($FeCl_3$)
— l'acide trifluoroacétique ($CF_3CO_2H$)
— le chlorure ferrique/ammoniac ($FeCl_3NH_3$)
— le pentachlorure d'antimoine ($SbCl_5$)
— le calcium/ammoniac ($CaNH_3$)
— le baryum/ammoniac ($BaNH_3$)
— le strontium/ammoniac ($SrNH_3$)

Naturellement il est également possible d'utiliser un mélange de ces composés pour former le complexe de graphite.

Ces complexes sont susceptibles de s'exfolier lorsqu'on les porte à une température supérieure à 150 °C pour donner ainsi un graphite expansé de faible masse volumique.

L'expansion du graphite est généralement telle que le volume du graphite expansé est compris entre 20 et 300 fois le volume du complexe de graphite traité. Le coefficient d'expansion dépend à la fois de la nature du complexe et de la température d'expansion.

Il sera souvent avantageux de réaliser l'expansion à une température comprise entre 180 et 250 °C.

La masse volumique du graphite expansé mis en œuvre dans le procédé de l'invention sera

généralement comprise entre 0,001 et 0,2 g/cm$^3$ et de préférence entre 0,005 et 0,015.

Afin que le procédé de l'invention atteigne son efficacité maximale il sera avantageux de réaliser un bon mélange du graphite expansé et du solide réactant de façon à répartir le graphite expansé dans l'ensemble du lit du solide de réactant.

La mise en œuvre pratique des mélanges peut s'effectuer de plusieurs manières. On pourra par exemple : mélanger le solide réactant avec le graphite expansé dans des proportions variables ; on pourra également : mélanger le solide réactant avec le complexe de graphite dans des proportions variables, l'ensemble étant porté à la température nécessaire à l'expansion par exemple entre 180 à 250 °C, l'expansion du graphite complexé pouvant s'effectuer librement. Dans une variante du processus précédent on pourra mélanger le solide réactant avec le complexe de graphite dans des proportions variables, le solide étant préalablement traité de telle manière que, porté à la température d'expansion entre 180 et 250 °C, par exemple, il perde complètement ce réactif d'addition, de l'eau ou tout gaz avec lequel il est susceptible de réagir, l'ensemble est porté ensuite à cette température, l'expansion pouvant s'effectuer librement.

De tels protocoles peuvent être réalisés au sein même du réacteur où se situe la réaction gaz-solide.

La quantité de graphite expansé introduite dans le milieu réactionnel dépend naturellement d'une part de la nature de la réaction chimique gaz-solide mise en œuvre et d'autre des qualités du graphite expansé choisi. Cette quantité rapportée en poids, au poids du réactant solide sera généralement comprise entre 1 et 60 %. Il faut cependant observer comme le montrent les exemples ci-après que de très bons résultats sont obtenus dans la gamme allant de 5 à 30 %.

Le mélange de graphite expansé au solide réactant présente des avantages importants dans le procédé :

— l'emploi de graphite expansible à très grande surface spécifique et qui se présente sous forme de feuillets permet la diffusion du gaz même en milieu confiné ;

— la conductibilité thermique du mélange (de 120 à 200 $Wm^{-1} \cdot K^{-1}$ suivant la nature du solide réactionnel et les proportions respectives de solide et graphite) est importante : elle est de l'ordre de celle des bons métaux conducteurs de chaleur.

Le procédé de l'invention est particulièrement bien adapté à la réalisation de réactions gaz-solide renversables mises en œuvre dans des cycles tels que ceux qui sont utilisés pour le stockage chimique de l'énergie ou les pompes à chaleur chimiques. En effet, un tel système, mélange graphite expansé-réactant solide et gaz, peut avoir une densité énergétique importante grâce au confinement élevé et fonctionner à haute puissance grâce à la vitesse élevée et au moyen d'une surface d'échange faible.

Les exemples suivants, donnés à titre indicatif et non limitatif, illustrent l'invention.

Pour ces exemples, on a réalisé les réactions de synthèse et de décomposition entre des chlorures alcalino-terreux ou métallique et un dérivé de l'ammoniac dans un réacteur sans échangeur interne, les échanges de chaleur s'effectuant uniquement par les parois du réacteur ; les quantités de solide réactant de l'ordre de 300 g sont disposés dans un réacteur de 0,4 dm$^3$.

## Exemples 1 à 6

Dans ces exemples on a réalisé la réaction de synthèse entre $CaCl_2$ et la méthylamine suivant :

$$\underset{(s)}{CaCl_2,\ 2\,NH_2CH_3} + \underset{(g)}{4\,NH_2CH_3} + \longrightarrow \underset{(s)}{CaCl_2,\ 6\,NH_2CH_3} + \Delta H$$

avec des mélanges de 0 à 5 % de graphite expansé.

La température du solide était de 30 °C et celle du réservoir de méthylamine de 20 °C.

Le graphite expansé utilisé dans ces exemples 1 à 6, et les exemples suivants a été obtenu par exfoliation d'un complexe de graphite-sulfate contenant 8 % d'acide sulfurique combiné à une température de 200 °C. Le graphite expansé a une masse volumique de 0,01 g/cm$^3$.

Les résultats obtenus sont résumés dans le tableau 1 ci-dessous.

(Voir Tableau 1 page 4)

Tableau 1

| Exemple n° | Pourcentage (Pds) graphite expansé | Réaction complète (Durée H) | Densité énergétique max. KWh/m3 | Puissance moyenne W/KgCaCl$_2$ |
|---|---|---|---|---|
| 1 | 0 | 10 | 198 | 50 |
| 2 | 5 | 8,75 | 185 | 59 |
| 3 | 15 | 6,25 | 160 | 76 |
| 4 | 25 | 4 | 136 | 124 |
| 5 | 35 | 2,9 | 115 | 166 |
| 6 | 50 | 2,4 | 83 | 250 |

Les puissances ont été mesurées par calorimétrie en mesurant les températures d'entrée et de sortie du réacteur et en effectuant avec la mesure du débit du fluide caloporteur le bilan enthalpique de la réaction, après avoir naturellement déterminé expérimentalement la valeur en eau du réacteur contenant le solide et ses accessoires.

On constate, pour des conditions expérimentales identiques, une diminution du temps de réaction complète de 10 heures à 2,4 heures, soit un passage de la puissance de la réaction exothermique de 50 à 250 W/Kg $CaCl_2$.

Exemples 7 à 12

Dans ces exemples on a réalisé la réaction 1, mais en sens inverse.

$$CaCl_2, 6\,NH_2CH_3 \longrightarrow CaCl_2, 2\,NH_2CH_3 + 4\,NH_2CH_3 - \Delta H$$

et cela dans des conditions expérimentales identiques, les résultats obtenus sont résumés dans le tableau 2 ci-dessous.

Tableau 2

| Exemple n° | Pourcentage graphite expansé % poids | Durée Réaction totale (H) | Densité énergétique max. KWh/m3 | Puissance moyenne W/kg CaCl$_2$ |
|---|---|---|---|---|
| 7 | 0 | 10 | 198 | 26 |
| 8 | 5 | 8,25 | 185 | 30 |
| 9 | 15 | 6,30 | 160 | 40 |
| 10 | 25 | 4 | 136 | 65 |
| 11 | 35 | 2 | 115 | 129 |
| 12 | 50 | 1,5 | 83 | 173 |

On constate, pour des conditions expérimentales identiques, une diminution du temps de réaction complète de 10 heures à 1,5 heures, soit un passage de puissance de la réaction endothermique de 26 à 173 W/kg $CaCl_2$.

Il faut observer que dans ces expériences, du fait du volume occupé par le graphite expansé, son addition entraîne une diminution de la densité énergétique c'est-à-dire de l'énergie calorifique qu'il est possible d'extraire de la réaction par volume unitaire de solide.

Exemple 13

Dans cet exemple on a réalisé la réaction de synthèse entre $ZnCl_2$ et la méthylamine suivant :

$$ZnCl_2, 4\ NH_2CH_3 + 2\ NH_2CH_3 \longrightarrow ZnCl_2, 6\ NH_2CH_3 + \Delta H$$

avec des mélanges de 0 à 50 % de graphite expansé.

On constate, pour des conditions expérimentales identiques, une diminution du temps de réaction complète de 14 heures (0 %) à 1,42 heure, soit un passage de la puissance de la réaction exothermique de 11 à 108 W/kg de $ZnCl_2$.

Exemple 14

Dans cet exemple on a réalisé la même réaction que dans l'exemple 13, mais en sens inverse.

On constate, pour des conditions expérimentales identiques une diminution du temps de réaction complète de 2,5 h à moins de 6 minutes, soit une augmentation de puissance de la réaction endothermique de 42 à plus de 1 000 W/kg $ZnCl_2$.

Exemple 15

Les réactions décrites dans les exemples 1 à 12 ont été répétées 170 fois dans des conditions identiques de fonctionnement avec un mélange à 20 % de graphite. La vitesse des réactions a été suivie durant ces cyclages : elle ne subit aucune atténuation notable.

Un autre intérêt de l'invention est la tenue du milieu réactionnel au cours d'un nombre élevé de réactions entre le solide + graphite expansé et le gaz dans un même réacteur.

On voit par ces exemples l'intérêt que peut présenter l'utilisation de graphite expansé hors du milieu réactionnel ou dans le milieu réactionnel pour augmenter la vitesse de réactions entre un solide et un gaz : la puissance thermique que l'on peut introduire ou extraire de telles réactions est multipliée par 5 ou par 24 selon les cas.

L'emploi de tels mélanges permet des confinements de réactif solide très importants et une diminution très appréciable des surfaces d'échange dans les réacteurs solide-gaz.

**Revendications**

1. Procédé de mise en œuvre de réactions du type gaz-solide caractérisé en ce qu'on ajoute au milieu réactionnel du graphite expansé de masse volumique comprise entre 0,001 et 0,02 g/cm$^3$.
2. Procédé selon la revendication 1, caractérisé en ce que la quantité de graphite expansé ajouté au milieu réactionnel est comprise entre 1 et 60 % poids de la quantité de solide réactant présent dans le milieu réactionnel.
3. Procédé selon l'une des revendications 1 et 2, caractérisé en ce que le graphite expansé mis en œuvre est préparé par exfoliation d'un complexe de graphite à une température au moins égale à 150 °C.
4. Procédé selon l'une des revendications 1 à 3, caractérisé en ce que le graphite expansé est ajouté au milieu réactionnel de sorte qu'il soit réparti dans l'ensemble du lit du solide réactant.
5. Procédé selon l'une des revendications 1 à 4, caractérisé en ce que le graphite est ajouté au milieu réactionnel sous forme de complexe de graphite et expansé *in situ* par chauffage du milieu réactionnel.

**Claims**

1. The method of performing a reaction of the gas-solid type which is characterized in that there is added to the reactive medium expanded graphite of a volumetric mass between 0.001 and 0.02 g/cm$^3$ in the reactive medium.
2. The method of claim 1 wherein the quantity of expanded graphite added to the reactive medium is between about 1 and about 60 % by weight of the quantity of the reactive solid present in the reactive medium.
3. The method of claim 1 wherein the expanded graphite is prepared by exfoliation of a graphite complex at a temperature equal at least to 150 °C.
4. The method of claim 1 wherein the expanded graphite in the reactive medium is distributed over the whole of the bed of solid reactant.
5. The method of claim 1 wherein the graphite is added to the reactive medium as a graphite complex and is expanded *in situ* by heating of the reactive medium.

**Patentansprüche**

1. Verfahren zur Einwirkung eines Gases auf einen Feststoff, gekennzeichnet durch die Zugabe zum Reaktionsmedium von geblähtem Graphit mit einer Massendichte von 0,001 bis 0,02 g/cm$^3$.
2. Verfahren nach Anspruch 1, gekennzeichnet durch die Zugabe zum Reaktionsmedium von

geblähtem Graphit in einer Menge von 1 bis 60 Gew.-%, bezogen auf den im Reaktionsmedium vorhandenen reagierenden Feststoff.

3. Verfahren nach Anspruch 1 oder 2, dadurch gekennzeichnet, daß der verwendete geblähte Graphit durch Blähung eines Graphitkomplexes bei einer Temperatur von mindestens 150 °C hergestellt wird.

4. Verfahren nach einem der Ansprüche 1 bis 3, dadurch gekennzeichnet, daß der geblähte Graphit dem Reaktionsmedium so zugegeben wird, daß er gleichmäßig über das Gesamtbett des reagierenden Feststoffs verteilt ist.

5. Verfahren nach einem der Ansprüche 1 bis 4, dadurch gekennzeichnet, daß der geblähte Graphit dem Reaktionsmedium in Form eines Graphitkomplexes zugegeben und *in situ* durch Erhitzen des Reaktionsmediums gebläht wird.